# EUROPEAN PATENT APPLICATION

(11) **EP 4 696 593 A1**
(43) Date of publication of application: **18.02.2026**
(21) Application number: 24212689.4
(22) Date of filing: 13.11.2024
(51) Int. Cl.: B62J 1/02, B62K 19/36

(54) **BICYCLE SADDLE HOLDING UNIT**

(71) Applicant: Silverback Technologie Gmbh, 72622 Nürtingen (DE)
(72) Inventor: Retief, Deon, 72622 Nürnberg (DE)
(74) Representative: Jeck, Jonathan

(57) **Abstract**

The present disclosure provides a bicycle saddle holding unit for a bicycle frame. The bicycle saddle holding unit comprises a connection portion to be connected to a single or upper tube of the bicycle frame, and one or more suspension elements extending from the connection portion. The one or more suspension elements hold a receptacle for a seat post of a bicycle saddle. The suspension elements may comprise multiple parallel suspension struts extending from the main body portion. The main body portion is configured to receive a seat post for supporting a bicycle saddle. The one or more suspension elements are elastically deformable to provide vibration dampening during riding.

## Description

The present disclosure relates and seat units, and more particularly to a bicycle saddle holding unit according to claim 1 and method for reducing vibrations experienced by a cyclist during riding according to claim 11.

Preferred aspects are outlined in the dependent claims and the description.

Bicycle frames have traditionally been designed with a triangular or diamond-shaped structure, comprising a top tube, down tube, and seat tube. This configuration has been widely used due to its structural integrity and ability to distribute forces effectively. The seat tube typically extends vertically from the bottom bracket to support the saddle, providing a direct connection between the rider and the frame.

In recent years, various attempts have been made to improve rider comfort and reduce vibrations in bicycle designs. For example, U.S. Patent No. 5,240,268 discloses a bicycle frame with a beam seat support formed of elongated beams attached to the frame top tube. While this design may provide some vibration dampening, it may not offer the same level of adjustability and customization as the present invention. The bicycle saddle holding unit of the present disclosure may provide several advantages over prior art solutions. In some aspects, the present invention may offer improved vibration absorption through the use of multiple suspension elements that can be tuned to specific rider preferences. Additionally, the design may allow for easier integration with existing bicycle frames, potentially enabling retrofitting on a wider range of bicycle models. The present invention may also provide a more compact and lightweight solution compared to some previous designs, which may contribute to overall bicycle performance and handling characteristics. the Prior art literature solution is prone to rocking vibrations due to its long seat bearing arm

In recent years, there has been increasing focus on improving rider comfort and performance in bicycle design. One area of particular interest has been vibration dampening, as prolonged exposure to road vibrations can lead to rider fatigue and discomfort. Various approaches have been explored to address this issue, including the use of specialized frame materials, suspension systems, and flexible frame components.

However, existing bicycle frame designs often struggle to effectively balance rigidity for efficient power transfer with compliance for vibration absorption. The rigid connection between the seat tube and the rest of the frame can transmit a significant amount of road vibration directly to the rider. This can be particularly problematic on rough terrain or during long rides, potentially impacting rider comfort and performance.

This Summary is provided to introduce a selection of concepts in a simplified form that are further described below in the Detailed Description.

In a first aspect, a bicycle saddle holding unit, which can also be called seat absorption unit or vibration absorption unit, for a bicycle frame is provided. The bicycle saddle holding unit includes a connection portion for connection to a to a single or upper tube, hence a tube of the bicycle frame, and one or more suspension elements, in particular suspension struts, extending from the connection portion, in particular towards a seat post, wherein the one or more suspension elements hold a receptacle for a seat post of a bicycle saddle.

This configuration allows for improved vibration dampening and rider comfort by suspending the saddle separately from the main frame using flexible suspension elements. The absence of a traditional rigid seat tube enables greater vertical compliance and shock absorption.

The bicycle saddle holding unit, which may generally also be called seat unit, may comprise multiple parallel suspension struts extending from the main body portion which may be horizontally distant from each other.

Utilizing multiple parallel suspension elements, e.g. struts, provides enhanced stability and load distribution while maintaining flexibility for vibration absorption. This arrangement can be tuned to achieve an optimal balance of support and compliance.

The bicycle saddle holding unit may have a main body portion configured to receive a seat post for supporting a bicycle saddle.

Incorporating a receptacle for a standard seat post allows for compatibility with a wide range of bicycle saddles, enabling riders to use their preferred saddle design while benefiting from the improved suspension characteristics of the holding unit.

The one or more suspension elements may be elastically deformable to provide vibration dampening during riding.

The elastic deformability of the suspension elements enables them to flex and absorb road vibrations and impacts, significantly reducing the transmission of these forces to the rider and enhancing overall comfort during cycling.

The bicycle saddle holding unit may further comprise attachment means for detachably connecting the seat unit to the upper tube of the bicycle frame.

Providing detachable attachment means allows for easy installation, removal, and adjustment of the saddle holding unit on the bicycle frame. This facilitates maintenance, customization, and potential upgrades without requiring permanent modifications to the frame.

The attachment means may comprise screws for adjustably positioning the seat unit along the upper tube.

Using screws as the attachment mechanism enables fine-tuning of the saddle position to accommodate different rider preferences and body geometries, enhancing the overall ergonomics and fit of the bicycle.

The arrangement of suspension element may form a main body portion of the bicycle saddle holding unit. the main body portion, may have a tapered profile narrowing from an upper section to a lower section.

A tapered profile can contribute to improved aerodynamics and weight distribution, potentially enhancing the bicycle's overall performance characteristics while maintaining the structural integrity of the saddle holding unit.

The one or more suspension elements may have a dilating profile towards a frame connecting portion.

A dilating profile in the suspension elements can provide progressive resistance, offering softer initial compliance for small bumps and increasing stiffness for larger impacts. This design can optimize ride quality across various terrain conditions.

The one or more suspension elements may be configured to allow vertical oscillation of the bicycle saddle holding unit during riding while maintaining a substantially fixed horizontal position relative to the upper tube.

This configuration enables the saddle to move vertically to absorb shocks and vibrations while preventing unwanted fore-aft movement, maintaining proper rider positioning and pedalling efficiency throughout the ride.

The suspension elements may be arranged in a cross-like arrangement between the seat post and the frame connecting portion providing for a particularly rigid setup to minimize torsional and/or lateral movement.

A cross-like arrangement of suspension elements can provide multi-directional support and stability, potentially improving the overall ride quality by addressing vibrations and impacts from various angles.

In a second aspect, a method of reducing vibrations experienced by a cyclist on a bicycle is provided. The method comprises providing a bicycle frame comprising an (upper) tube, preferably with an S-shaped profile, attaching a bicycle saddle holding unit to the (upper) tube using a connection portion with one or more suspension elements, in particular suspension struts, wherein the one or more suspension elements are arranged to suspend vibrations of the frame, and allowing vertical oscillation of the bicycle saddle holding unit during riding to dampen vibrations transmitted from the bicycle frame to the cyclist.

This method offers a comprehensive approach to vibration reduction, combining an optimized frame design with a suspended bicycle saddle holding unit to significantly enhance rider comfort and reduce fatigue during cycling.

The one or more suspension elements may comprise multiple parallel suspension struts extending from the seat unit which may be horizontally distant from each other.

Utilizing multiple (in particular more than two) parallel suspension struts in the method can provide a more controlled and stable suspension effect, potentially offering a smoother ride across various terrain types.

The method may further comprise attaching the seat unit to an upper tube or a single tube using attachment means for detachably connecting the seat unit at different positions along the upper tube.

This step allows for customization of the saddle position to suit individual rider preferences and body types, potentially improving overall cycling ergonomics and comfort.

The one or more suspension elements may be elastically deformable to provide vibration dampening during riding.

Incorporating elastically deformable suspension elements in the method enhances the overall vibration dampening effect, potentially leading to reduced rider fatigue and improved comfort over long distances.

The seat unit may comprise a main body portion configured to receive a seat post for supporting a bicycle saddle.

This feature of the method ensures compatibility with a wide range of standard bicycle saddles, allowing cyclists to maintain their preferred saddle choice while benefiting from the improved vibration dampening system.

Embodiments of the invention will be described, by way of example, with reference to the following drawings, in which:
Fig. 1 presents an exploded view of a portion of a bicycle frame with a bicycle saddle holding unit assembly, according to aspects of the present disclosure.
Fig. 2 illustrates a perspective view of a bicycle saddle holding unit for a bicycle frame, according to aspects of the present disclosure.
Fig. 3 illustrates another perspective view of a bicycle saddle holding unit for a bicycle frame, according to aspects of the present disclosure.
Fig. 4 illustrates an exploded view of a bicycle frame with the novel seat unit design, according to aspects of the present disclosure.
Fig. 5 illustrates a side view of a bicycle frame with the novel seat unit design, according to aspects of the present disclosure.
Fig. 6 shows a detailed view of a seat unit configuration with multiple suspension elements, according to an embodiment.
Fig. 7 depicts an alternative configuration of a bicycle saddle holding unit, according to aspects of the present disclosure.

Common reference numerals are used throughout the figures to indicate similar features.

The present disclosure relates saddle holding units. More specifically, the disclosure provides a bicycle saddle holding unit that may be used to reduce vibrations experienced by a cyclist during riding.

A bicycle saddle holding unit may include a connection portion for attaching to a tube of a bicycle frame. The bicycle saddle holding unit may also include one or more suspension elements extending from the connection portion. In some aspects the suspension elements may form a main body and/or hold a receptacle for a seat post of a bicycle saddle.

The suspension elements may allow for vertical oscillation of the saddle during riding while maintaining a substantially fixed horizontal position relative to the bicycle frame. This configuration may help dampen vibrations transmitted from the bicycle frame to the cyclist, potentially improving rider comfort over various terrain conditions.

According to aspects of the invention, the bicycle saddle holding unit may be compatible with existing bicycle frames, allowing for retrofitting or easy installation on different bicycle models. The unit may attach to an upper tube or single tube of a bicycle frame using detachable attachment means, which may allow for adjustable positioning along the tube.

The suspension elements of the bicycle saddle holding unit may take various forms. In some cases, the suspension elements may comprise multiple parallel suspension which may be horizontally distant from each other struts or crosswise arranged struts. The suspension elements may be elastically deformable to provide vibration dampening. In certain aspects, the suspension elements may have a dilating profile towards the frame connecting portion.

A bicycle incorporating the saddle holding unit may experience reduced transmission of road vibrations to the rider. This may potentially lead to increased comfort during long rides or when traversing rough terrain. The design may allow for vertical compliance while maintaining lateral stiffness for efficient power transfer during pedaling.

The bicycle saddle holding unit may be configured to work with standard bicycle saddles and seat posts, providing flexibility for cyclists to use their preferred saddle designs. In some implementations, the unit may include a main body portion with a tapered profile, which may contribute to aerodynamic performance.

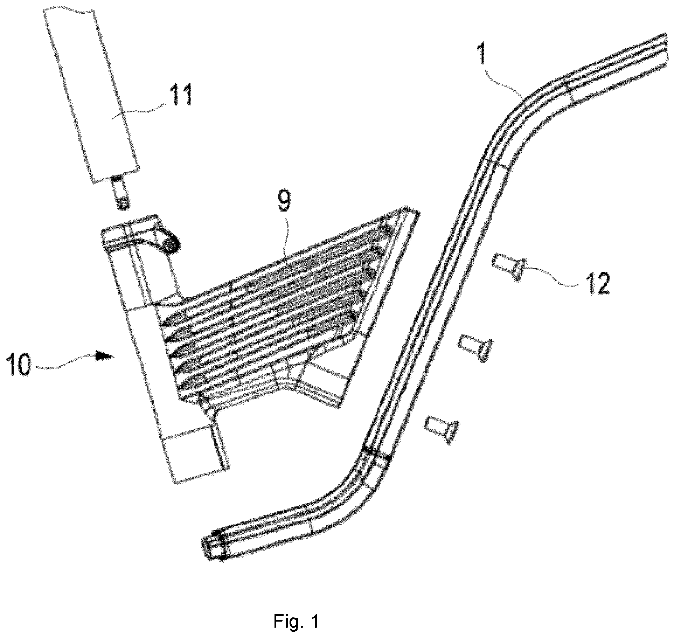

Referring to Fig. 1, an exploded view of a portion of a bicycle frame is shown, focusing on the attachment of a bicycle saddle holding unit 10 to an (S-shaped) (upper) tube 1. The bicycle saddle holding unit 10, which may also be called seat unit, comprises a connection portion configured to be connected to the upper tube 1 of the bicycle frame. Multiple suspension elements 9 may extend from the connection portion of the bicycle saddle holding unit 10. The suspension elements 9 may be designed to connect the bicycle saddle holding unit 10 to the upper tube 1, providing a flexible attachment that may allow for vertical oscillation during riding.

The bicycle saddle holding unit 10 may further include attachment means for detachably connecting the seat unit to the upper tube 1 of the bicycle frame. In this configuration, the attachment means comprise screws 12 that allow for adjustable positioning of the bicycle saddle holding unit 10 along the upper tube 1. The screws 12 may be inserted through holes in the connection portion of the bicycle saddle holding unit 10 and into corresponding threaded holes or inserts in the upper tube 1. This arrangement allows the bicycle saddle holding unit 10 to be attached at different positions along the upper tube 1, providing adjustability to accommodate riders of different heights or preferences.

A seat post 11 is shown above the bicycle saddle holding unit 10, indicating how it would be inserted into a receptacle in the bicycle saddle holding unit 10. The seat post 11 is designed to support a bicycle saddle, which is not shown in this figure.

The S-shaped profile of the upper tube 1 may create space for the attachment of the bicycle saddle holding unit 10 in a way that may enhance the suspension effect provided by the suspension elements 9.

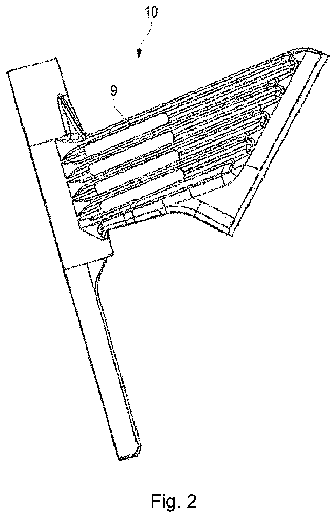

Referring to Fig. 2, a perspective view of a bicycle saddle holding unit 10 for a bicycle frame is illustrated. The bicycle saddle holding unit 10 comprises a connection portion configured to be connected to a single or upper tube 1 of the bicycle frame. One or more suspension elements 9 extend from the connection portion. In some aspects the one or more suspension elements 9 comprise multiple parallel suspension struts extending from the main body portion of the bicycle saddle holding unit 10. The suspension elements 9 may be arranged in a cross-like configuration between the receptacle for the seat post 11 and the frame connecting portion. This arrangement allows for vertical oscillation of the bicycle saddle holding unit 10 during riding while maintaining a substantially fixed horizontal position relative to the upper tube 1.

The suspension elements 9 are designed to hold a receptacle for a seat post 11 of a bicycle saddle 16. In some cases, the suspension elements 9 are elastically deformable to provide vibration dampening during riding. The multiple parallel suspension struts extending from the seat unit 10 distribute the load and provide controlled flexibility, which enhances the overall comfort for the cyclist.

The bicycle saddle holding unit 10 may have a tapered profile narrowing from an upper section to a lower section. In some aspects the suspension elements 9 have a dilating profile towards the frame connecting portion. This design allows for optimal stress distribution and flexibility in the suspension system.

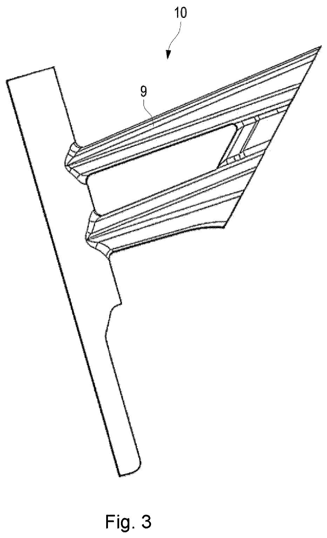

Referring to Fig. 3, a perspective view of a bicycle saddle holding unit 10 for a bicycle frame is illustrated. The bicycle saddle holding unit 10 comprises a main body portion and suspension elements 9. The main body portion has a tapered profile that narrows from an upper section to a lower section. This tapered design may provide structural integrity while reducing overall weight of the bicycle saddle holding unit 10.

The suspension elements 9 extend from the upper section of the main body portion. Each suspension element 9 may have a dilating profile towards the frame connecting part. The dilating profile of the suspension elements 9 may distribute stress and provide controlled flexibility, allowing for vertical oscillation of the bicycle saddle holding unit 10 during riding while maintaining a substantially fixed horizontal position relative to the upper tube 1.

The suspension elements 9 are arranged parallel to each other and are oriented in a way that suggests they would be approximately horizontal when mounted on a bicycle frame. This configuration allows for vertical oscillation of the bicycle saddle holding unit 10 during riding, providing a dampening effect for the cyclist.

The design of the bicycle saddle holding unit 10 with its integrated suspension elements 9 enables attachment to a bicycle frame without the need for a traditional seat tube. The main body portion is configured to receive a seat post for supporting a bicycle saddle.

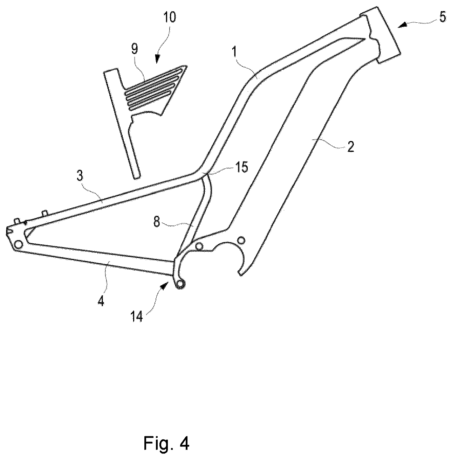

Referring to Fig. 4, the bicycle frame comprises an upper tube 1 and a lower tube 2, both may exhibit a S-shaped profile.

Fig. 4 depict, how the bicycle saddle holding unit 10 may be arranged on a bike frame above the pedals.

The support tube 8 may be provided for structural integrity to the bicycle frame in this particular case but may be omitted for other frames. The support tube 8 connects the upper tube 1 to the lower tube 2, enhancing the overall stability of the frame design. In some aspects the first endpoint of the support tube 8 is arranged at the junction point 15 between the upper tube 1 and the seat stay 3. This configuration allows for efficient load distribution and reinforces the connection between these frame components.

The second endpoint of the support tube 8 may be arranged at different locations depending on the type of bicycle. For non-electric bicycles, the second endpoint of the support tube 8 is arranged at the bottom bracket 14. This arrangement provides additional support to the area where pedalling forces are concentrated. In the case of electric bicycles, the second endpoint of the support tube 8 may be arranged at the motor mount. This configuration helps to reinforce the frame structure around the motor, which may be subject to additional stresses due to the electric assist system.

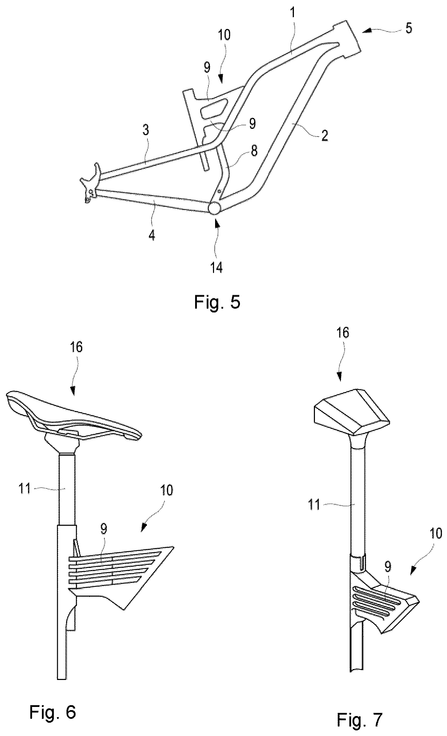

Referring to Figs. 5-7, a bicycle saddle holding unit 10 is attached to an upper tube 1 of a bicycle frame. The upper tube 1 may have an S-shaped profile. The bicycle saddle holding unit 10 comprises a connection portion that connects to the upper tube 1. One or more suspension elements 9 extend from the connection portion of the bicycle saddle holding unit 10. The suspension elements 9 hold a receptacle for a seat post 11 of a bicycle saddle 16.

The bicycle saddle holding unit 10 includes a main body portion configured to receive the seat post 11 for supporting the bicycle saddle 16. The suspension elements 9 are arranged to allow vertical oscillation of the bicycle saddle holding unit 10 during riding while maintaining a substantially fixed horizontal position relative to the upper tube 1. This configuration provides vibration dampening for the cyclist.

In some aspects the suspension elements 9 comprise multiple parallel suspension struts extending from the main body portion of the bicycle saddle holding unit 10. The parallel arrangement of the suspension elements 9 distributes the load and provides controlled flexibility during riding.

The suspension elements 9 may be elastically deformable to enhance vibration dampening. In some cases, the suspension elements 9 have a dilating profile towards the frame connecting portion, which may further contribute to the dampening effect. The elasticity may generally be higher in comparison to the general elasticity of a carbon of metal frame.

The bicycle saddle holding unit 10 may include attachment means for detachably connecting the unit to the upper tube 1 of the bicycle frame. These attachment means allow for adjustable positioning of the bicycle saddle holding unit 10 along the upper tube 1, providing customization options for different riders or riding styles.

The bicycle saddle holding unit 10 incorporates vibration dampening mechanisms to reduce vibrations transmitted from the frame to the cyclist. The one or more suspension elements 9 are arranged to suspend vibrations of the frame. These suspension elements 9 may be elastically deformable, allowing them to flex and absorb vibrations during riding.

The bicycle saddle holding unit 10 is designed to allow vertical oscillation during riding, further dampening vibrations transmitted from the bicycle frame to the cyclist. This vertical oscillation may occur while maintaining a substantially fixed horizontal position relative to the upper tube 1. The combination of the suspension elements 9 and the ability for vertical oscillation works together to provide a more comfortable riding experience by reducing the impact of road vibrations on the cyclist.

The bicycle frame comprises an upper tube 1, which may have an S-shaped profile. This S-shaped profile of the upper tube 1 may contribute to the overall vibration dampening characteristics of the bicycle frame.

The suspension elements 9 may be configured in various arrangements to optimize vibration dampening. In some aspects multiple parallel suspension struts extend from the main body portion of the bicycle saddle holding unit 10. This parallel arrangement may distribute the load and provide more controlled flexibility. In other aspects, the suspension elements 9 may be arranged in a cross-like configuration between the seat post 11 and the frame connecting portion, offering a different vibration dampening characteristic.

The attachment of the bicycle saddle holding unit 10 to the upper tube 1 may be adjustable, allowing for fine-tuning of the vibration dampening properties. Attachment means 12, such as screws, may be used for detachably connecting the bicycle saddle holding unit 10 at different positions along the upper tube 1. This adjustability may allow cyclists to optimize the position of the bicycle saddle holding unit 10 for their individual preferences and riding conditions.

The bicycle saddle holding unit may generally be designed as a monocoque element, providing a unified structure with integrated suspension elements. In some aspects the monocoque design enhances the overall strength and rigidity of the bicycle saddle holding unit while minimizing weight. The suspension elements of the bicycle saddle holding unit may be attached to the upper tube using various methods. In some cases, screws secure the suspension elements to the upper tube, allowing for adjustable positioning and easy removal if needed. Alternatively, rivets may be used to create a more permanent connection between the suspension elements and the upper tube. For applications requiring a highly durable and fixed attachment, welding techniques may join the suspension elements directly to the upper tube. The choice of attachment method may depend on factors such as desired adjustability, expected riding conditions, and manufacturing preferences. Regardless of the attachment method, the suspension elements are configured to extend from the bicycle saddle holding unit and connect to the upper tube in a manner that facilitates vertical oscillation during riding while maintaining horizontal stability.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein.

Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A bicycle saddle holding unit (10) for a bicycle frame, comprising:
a connection portion to be connected to a single or upper tube (1) of the bicycle frame; and
suspension elements, in particular suspension struts (9), which are at least partially distant to each other and extending from the connection portion,
wherein the one or more suspension elements hold a receptacle for a seat post (11) of a bicycle saddle (16).

2. The bicycle saddle holding unit (10) of claim 1, wherein the one or more suspension elements comprise multiple parallel suspension struts extending from the main body portion.

3. The bicycle saddle holding unit (10) of claim 1 or 2, wherein the main body portion is configured to receive a seat post (11) for supporting a bicycle saddle (16).

4. The bicycle saddle holding unit (10) of any of claims 1 to 3, wherein the one or more suspension elements (9) are elastically deformable to provide vibration dampening during riding.

5. The bicycle saddle holding unit (10) of any of claims 1 to 4, further comprising attachment means (12) for detachably connecting the seat unit (10) to the upper tube (1) of the bicycle frame.

6. The bicycle saddle holding unit (10) of claim 5, wherein the attachment means comprise screws (12) for adjustably positioning the seat unit (10) along the upper tube (1).

7. The bicycle saddle holding unit (10) of any of claims 1 to 6, wherein the main body portion has a tapered profile narrowing from an upper section to a lower section.

8. The bicycle saddle holding unit (10) of any of claims 1 to 7, wherein the one or more suspension elements (9) have a dilating profile towards a frame connecting portion.

9. The bicycle saddle holding unit (10) of any of claims 1 to 8, wherein the one or more suspension elements (9) are configured to allow vertical oscillation of the seat unit (10) during riding while maintaining a substantially fixed horizontal position relative to the upper tube (1).

10. The bicycle saddle holding unit (10) according to claim 1, wherein the suspension elements (9) are arranged in a cross like arrangement between the seat post (11) and the frame connecting portion.

11. A method of reducing vibrations experienced by a cyclist on a bicycle, the method comprising:
providing a bicycle frame comprising an upper tube (1), preferably with an S-shaped profile;
attaching a seat unit (10) to the upper tube (1) using a connection portion with one or more suspension elements (9), in particular suspension struts, wherein the one or more suspension elements(9) are arranged to suspend vibrations of the frame; and
allowing vertical oscillation of the seat unit (10) during riding to dampen vibrations transmitted from the bicycle frame to the cyclist.

12. The method of claim 11, wherein the one or more suspension elements (9) comprise multiple parallel suspension struts (9) extending from the seat unit (10).

13. The method of claim 11 or 12, further comprising attaching the seat unit (10) to an upper tube (1) or a single tube using attachment means (12) for detachably connecting the seat unit (10) at different positions along the upper tube (1).

14. The method of any of claims 11 to 13, wherein the one or more suspension elements (9) are elastically deformable to provide vibration dampening during riding.

15. The method of any of claims 11 to 14, wherein the seat unit (10) comprises a main body portion configured to receive a seat post (11) for supporting a bicycle saddle (16).

## Amended claims

### Amended claims in accordance with Rule 137(2) EPC.

1. A bicycle saddle holding unit (10) for a bicycle frame, comprising:
a connection portion to be connected to a single or upper tube (1) of the bicycle frame; and
suspension elements, in particular suspension struts (9), which are distant to each other and extending from the connection portion,
wherein the one or more suspension elements hold a receptacle for a seat post (11) of a bicycle saddle (16),
wherein the bicycle saddle holding unit is designed as a monocoque element, providing a unified structure with integrated suspension elements.

2. The bicycle saddle holding unit (10) of claim 1, wherein the one or more suspension elements comprise multiple parallel suspension struts extending from the main body portion.

3. The bicycle saddle holding unit (10) of claim 1 or 2, wherein the main body portion is configured to receive a seat post (11) for supporting a bicycle saddle (16).

4. The bicycle saddle holding unit (10) of any of claims 1 to 3, wherein the one or more suspension elements (9) are elastically deformable to provide vibration dampening during riding.

5. The bicycle saddle holding unit (10) of any of claims 1 to 4, further comprising attachment means (12) for detachably connecting the seat unit (10) to the upper tube (1) of the bicycle frame.

6. The bicycle saddle holding unit (10) of claim 5, wherein the attachment means comprise screws (12) for adjustably positioning the seat unit (10) along the upper tube (1).

7. The bicycle saddle holding unit (10) of any of claims 1 to 6, wherein the main body portion has a tapered profile narrowing from an upper section to a lower section.

8. The bicycle saddle holding unit (10) of any of claims 1 to 7, wherein the one or more suspension elements (9) have a dilating profile towards a frame connecting portion.

9. The bicycle saddle holding unit (10) of any of claims 1 to 8, wherein the one or more suspension elements (9) are configured to allow vertical oscillation of the seat unit (10) during riding while maintaining a substantially fixed horizontal position relative to the upper tube (1).

10. The bicycle saddle holding unit (10) according to claim 1, wherein the suspension elements (9) are arranged in a cross like arrangement between the seat post (11) and the frame connecting portion.

11. A method of reducing vibrations experienced by a cyclist on a bicycle, the method comprising:
providing a bicycle frame comprising an upper tube (1), preferably with an S-shaped profile;
attaching a seat unit (10) to the upper tube (1) using a connection portion with one or more suspension elements (9), in particular suspension struts, which are distant to each other and extending from the connection portion,
wherein the one or more suspension elements hold a receptacle for a seat post (11) of a bicycle saddle (16),
and wherein the bicycle saddle holding unit is designed as a monocoque element, providing a unified structure with integrated suspension elements,
wherein the one or more suspension elements (9) are arranged to suspend vibrations of the frame; and
allowing vertical oscillation of the seat unit (10) during riding to dampen vibrations transmitted from the bicycle frame to the cyclist.

12. The method of claim 11, wherein the one or more suspension elements (9) comprise multiple parallel suspension struts (9) extending from the seat unit (10).

13. The method of claim 11 or 12, further comprising attaching the seat unit (10) to an upper tube (1) or a single tube using attachment means (12) for detachably connecting the seat unit (10) at different positions along the upper tube (1).

14. The method of any of claims 11 to 13, wherein the one or more suspension elements (9) are elastically deformable to provide vibration dampening during riding.

15. The method of any of claims 11 to 14, wherein the seat unit (10) comprises a main body portion configured to receive a seat post (11) for supporting a bicycle saddle (16).
